# EUROPEAN PATENT SPECIFICATION

(11) **EP 2 345 824 B1**
(45) Date of publication and mention of the grant of the patent: **21.12.2016**
(21) Application number: 08877982.2
(22) Date of filing: 07.11.2008
(51) Int. Cl.: F16D 23/14, C10M 169/06, C10M 115/08, C10M 125/02, C10M 125/22, C10M 147/02, C10N 40/02, C10N 30/06, C10N 40/04, C10N 40/08, C10N 50/10

(54) **CLUTCH SUPPORT STRUCTURE**
KUPPLUNGSTRÄGERSTRUKTUR
STRUCTURE DE SUPPORT D EMBRAYAGE

(43) Date of publication of application: 20.07.2011
(73) Proprietor: TOYOTA JIDOSHA KABUSHIKI KAISHA, Toyota-shi, Aichi-ken, 471-8571 (JP)
(72) Inventor: KUBONO, Kazushige, Toyota-shi Aichi 471-8571 (JP); HUWA, Yoshio, Toyota-shi Aichi 471-8571 (JP); KUSANO, Naohumi, Toyota-shi Aichi 471-8571 (JP)
(74) Representative: Intès, Didier Gérard André
(86) International application number: PCT/JP2008/070308
(87) International publication number: WO 2010/052787

(56) References cited:
- JP-A- 2005 097 570
- JP-A- 2005 154 755
- JP-A- 2006 194 281
- JP-A- 2007 100 862
- JP-A- 2008 031 249
- JP-A- 2008 195 903
- JP-A- 2008 255 160

## Description

### TECHNICAL FIELD

The present invention relates to a clutch supporting structure, particularly, to a clutch supporting structure that is equipped with a clutch fork and a clutch-fork support, which slide one on another, and a grease, which is interposed between their sliding faces, in a clutch that is disposed between an engine and a transmission for vehicle.

### BACKGROUND ART

In automobiles, all sorts of sliding members have been used for the clutches, transmissions, engines, and the like. For example, a clutch fork and a clutch-fork support, which constitutes a clutch, slide one on another under a high contact pressure while interposing a grease between both of them.

Meanwhile, in order to cope with fuel-consumption regulations for automobile in recent years, it is important to develop techniques for upgrading sliding characteristics in sliding members.

Hence, for the purpose of reducing frictional coefficients and upgrading wear resistances in sliding members, formation of a diamond-like carbon film (hereinafter being referred to as "DLC film" when appropriate) on a sliding face has been carried out. The DLC film is an amorphous hard film in which carbon makes the major component. Carbon in the DLC film is graphitized to act as a solid lubricant agent. Consequently, when a DLC film is formed on a sliding face, it is possible to make reducing of the frictional coefficient compatible with upgrading of the wear resistance.

For example, a sliding structure has been known, which sliding structure comprises a first member in which a DLC film is formed on a surface of the substrate, a second member which slides against the first member while adapting this DLC film to be a contact face, and a grease which includes a molybdenum-system additive agent, and which is interposed between the first member and the second member (see Patent Literature No. 1, for instance) . In accordance with this sliding structure, it is possible to reduce the frictional coefficient and to upgrade the wear resistance by means of the DLC film. Moreover, an organic molybdenum-system additive agent turns into molybdenum disulfide at the time of sliding, and then acts as a solid lubricant agent. Consequently, the grease that includes an organic molybdenum-system additive agent also makes it possible to reduce the frictional coefficient.

Note that, in a piston mechanism for engine, a sliding structure has also been known, in which sliding structure not only fine irregularities with depths of from 0.5 to 30 *µ*m are formed on one of a cylinder-bore surface and a piston outer-circumference face and/or on both of them, but also a DLC film is formed on one of the cylinder-bore surface and the piston outer-circumference face and/or on both of them (see Patent Literature No 2, for instance). In this sliding structure, a liquid lubricant oil is interposed between the sliding faces.
Patent Literature No. 1: Japanese Unexamined Patent Publication (KOKAI) Gazette No. 2008-255,160; and
Patent Literature No. 2: Japanese Unexamined Patent Publication (KOKAI) Gazette No. 2005-69,008

### DISCLOSURE OF THE INVENTION

### Problem to be Solved by the Invention

However, since a grease is likely to drop off from a sliding face at the time of sliding, it has been difficult to realize the reduction of frictional coefficient by means of the grease for over a long period of time.

Moreover, since a DLC film is hard, the DLC film has a great aggressiveness against its counterpart. Consequently, it has been difficult to inhibit the wear of a mating member which slides against the DLC film.

Furthermore, when an organic molybdenum-system additive agent is included in a grease, a DLC film and the organic molybdenum-system additive agent undergo chemical reactions at the time of sliding, and then there might possibly arise such a case that the wear of the DLC film develops. A DLC film has a crystalline structure that is intermediate between that of cubic diamond and that of hexagonal graphite. Specifically, a DLC film includes hydrogen slightly, and has an amorphous structure in which diamond bonds and graphite bonds are present mixedly. Most of the DLC film having such an amorphous structure reacts chemically with an organic molybdenum-system additive agent, and thereby the wear of the DLC film is facilitated. Consequently, it has been difficult to realize the reduction of frictional coefficient and improvement of wear resistance by means of the DLC film for over a long period of time.

In particular, in a clutch supporting structure, it has been difficult to maintain the reduction of frictional coefficient and the low frictional characteristics for a long period of time either by changing the type of a grease to be interposed between the sliding faces, or even by increasing the amount of the grease.

The present invention is one which has been done in view of such circumstances; and is directed to a sliding part of clutch supporting structure which aims to solve the technical problem of maintaining the reduction of frictional coefficient and the low frictional characteristics for a long period of time, while simultaneously therewith upgrading the abrasion resistance.

### Means for Solving the Problem

(1) A clutch supporting structure according to the present invention that solves theaforementionedproblemis characterized in that:
the clutch supporting structure is equipped with:
   a clutch fork and a clutch-fork support, which respectively have a fork sliding face and a support sliding face that slide one on another; and
   a grease that is interposed between both of the sliding faces; and
   a surface roughness Rz (i.e., ten-point average roughness) of said fork sliding face is from 2 to 30 µm;
   a surface roughness Rz (i.e., ten-point average roughness) of said support sliding face is equal to or less than 5 µm, and a diamond-like carbon film is formed on the support sliding face; and
said grease includes a solid lubricant agent and a thickening agent;
   the solid lubricant agent is at least one member that is selected from the group consisting of inorganic molybdenum-system solid lubricant agents, graphite and PTFE; and
   the thickening agent is a non-soap-system thickening agent.

Here, the solid lubricant agents are other than organic molybdenum-system lubricant agents.

In the clutch supporting structure according to the present invention, it is possible to keep the grease from separating from the fork sliding face, because the surface roughness Rz of the fork sliding face, which slides against the DLC film to serve as a counterpart facing face, is set at from 2 to 30 µm. Moreover, it is possible to keep down the aggressiveness of the DLC film against its counterpart, because the surface roughness Rz of the support sliding face, on which the DLC film is formed, is set at 5 µm or less. Furthermore, by means of the DLC film per se that is formed on the support sliding face, it is possible to reduce the frictional coefficient and improve the wear resistance of the sliding part. Additionally, since the grease does not include any organic molybdenum-system solid lubricant virtually, chemical reactions facilitating the wear of the DLC film at the time of sliding do not occur between the solid lubricant agent and the DLC film. In addition, it is possible to keep the grease from detaching from the sliding part at the time of sliding, because the grease includes the non-soap-system thickening agent that has a high heat resistance.

Therefore, in accordance with the clutch supporting structure according to the present invention, it is possible not only to secure the functions of the grease and the DLC film by means of the combination of the aforementioned effects, but also to maintain their functions for over a long period of time by means of these combined effects. Consequently, in the sliding part where the fork sliding face and the DLC film, which is formed on the support sliding face, slide one on another, it is possible not only to reduce the frictional coefficient, but also to realize the reduction of frictional coefficient and the improvement of wear resistance for over a long period of time. Furthermore, since it is possible to reduce the aggressiveness of the DLC film against the fork sliding face, which serves as a counterpart sliding face to the DLC film, this also makes it feasible to upgrade the wear resistance of the counterpart sliding face.

It is preferable that the clutch supporting structure according to the present invention comprise at least one of the features that are respectively specified in the following items (2) through (6). It is also allowable that the clutch supporting structure according to the present invention comprise any one of the features that are respectively specified in the following items (2) through (6) independently of the other ones, or it is even permissible that it comprises a combination of two or more of the features that are respectively specified in the items (2) through (6).
(2) Said non-soap-system thickening agent can be a urea-system thickening agent.
(3) Said grease can include said solid lubricant agent in an amount of from 1 to 20% by mass, and said non-soap-system thickening agent in an amount of from 15 to 35% by mass, when the entirety of the grease is taken as 100% by mass.
(4) A Vickers hardness of said diamond-like carbon film can be from 1000 to 5000 Hv.
(5) A thickness of said diamond-like carbon film can be from 1 to 10 *µ*m.
(6) A Vickers hardness of said fork sliding face can be from 400 to 850 Hv.

### Effect of the Invention

Therefore, in accordance with the clutch supporting structure according to the present invention, it is possible to reduce the frictional coefficient in the sliding part where the fork sliding face and the DLC film, which is formed on the support sliding face, slide one against another, and additionally it is possible to realize this reduction of the frictional coefficient and the improvement of wear resistance in both of the support sliding face and the fork sliding face for over a long period of time.

### BRIEF DESCRIPTION OF THE DRAWINGS

Fig. 1 is a partially enlarged cross-sectional diagram that schematically illustrates a clutch supporting structure of an embodiment mode according to the present invention;
Fig. 2 is a graph that shows results of measuring sliding resistances for clutch supporting structures according to Working Example and Comparative Example No. 1;
Fig. 3 is a graph that shows a relationship between the surface roughness of a support sliding face and the wear amount of a mating-member in a clutch supporting structure; and
Fig. 4 is a graph that shows a relationship between the surface roughness of a support sliding face and the wear amount of a DLC film in a clutch supporting structure.

### Explanation on Reference Numerals

- 1:: Clutch Fork;
- 2:: Clutch-fork Support;
- 3:: Grease;
- 4:: DLC Film;
- 11:: Fork Sliding Face; and
- 21:: Support Sliding Face

### BEST MODE FOR CARRYING OUT THE INVENTION

Hereinafter, an embodiment mode of a clutch supporting structure according to the present invention will be explained in detail. Note that the embodiment mode to be explained is nothing more than one particular embodiment among all of the possible embodiment modes. Accordingly, a clutch supporting structure according to the present invention can be conducted in various modes to which modifications and improvements are performed, which modifications and improvements can be carried out by one of ordinary skill in the art, within a range not departing from the scope of the present invention but without ever being limited to the embodiment mode that is described below.

A clutch supporting structure according to the present embodiment mode is one which is directed to a clutch fork 1 and a clutch-fork support 2 that serve as constituent parts of a clutch to be disposed between an engine and a transmission of automobile.

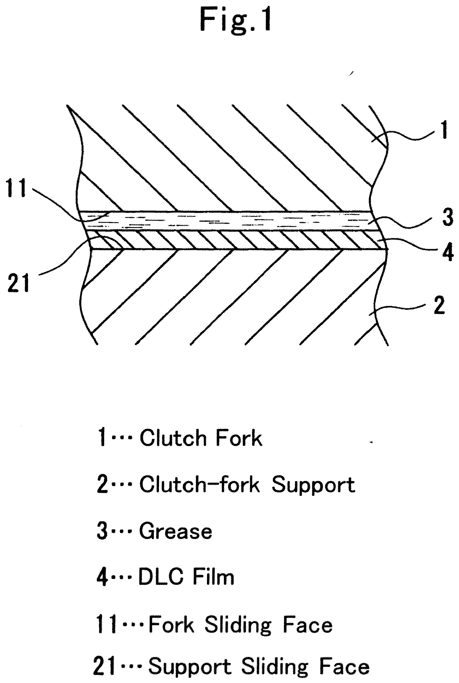

Specifically, as illustrated in a partially enlarged cross-sectional diagram in Fig. 1, this clutch supporting structure is equipped with a clutch fork 1 and a clutch-fork support 2 which respectively have a fork sliding face 11 and a support sliding face 21 that slide one on another; and a grease 3 that is interposed between both of the sliding faces 11 and 21. Moreover, a DLC film 4 is formed on the support sliding face 21 of the clutch-fork support 2.

A material quality for the clutch fork 1 is not limited especially, and so can be adapted to be stainless steels, carbon steels or cast irons, and the like, as having been done heretofore.

The fork sliding face 11 of the clutch fork 1 has a surface roughness Rz of from 2 to 30 µm. A means for adjusting the surface roughness of the fork sliding face 11 is not limited especially, and so it is possible to utilize finish processing, such as shot peening or shot blasting, and the like.

When the surface roughness Rz of the fork sliding face 11 becomes less than 2 µm, the function of serving as grease-reservoir dents in the fork sliding surface 11 becomes insufficient. Consequently, it becomes difficult to realize the reduction of frictional coefficient in the sliding part for over a long period of time, because the grease 3 becomes likely to separate from the fork sliding surface 11. On the other hand, when the surface roughness Rz of the fork sliding face 11 exceeds 30 µm, it becomes difficult to intend reducing the frictional coefficient in the sliding part, because the fork sliding face 11 becomes likely to make contact with the DLC film 4 directly without ever interposing the grease 3 therebetween.

In order to keep the DLC film 4, namely, a counterpart sliding member to the fork sliding face 11 of the clutch fork 1, from wearing, it is preferable that the fork sliding face 11 be softer than the DLC film 4 is. It is preferable that the fork sliding face 11 have a Vickers hardness of from 250 to 850 Hv, and it is more preferable that it be from 400 to 850 Hv. When the Vickers hardness of the fork sliding face 11 becomes less than 250 Hv, it becomes difficult to secure strength or rigidity that is necessary for serving as the clutch fork 1.

A material quality for the clutch-fork support 2 is not limited especially, and so can be adapted to be stainless steels, carbon steels or cast irons, and the like, as having been done heretofore.

The support sliding face 21 of the clutch-fork support 2 has a surface roughness Rz of 5 µm or less. It is preferable that the surface roughness of the support sliding face 21 be as low as possible, because the lower it is the smaller the aggressiveness of the DLC film 4 against its counterpart can be. However, its lower limit is set at approximately 0.1 *µ*m in Rz because of processing limitations. A means for adjusting the surface roughness of the support sliding face 21 is not limited especially, and so it is possible to utilize finish processing, such as shot peening or shot blasting.

The DLC film 4 is formed on that support sliding face 21. In other words, in the clutch supporting structure according to the present embodiment mode, the DLC film 4 that is formed on the support sliding face 21 and the fork sliding face 11 slide one on another.

It is preferable that the DLC film4haveaVickers hardness of from 1000 to 5000 Hv. When the Vickers hardness of the DLC film 4 becomes less than 1000 Hv, a wear amount of the clutch-fork support 2 augments. On the other hand, when the Vickers hardness of the DLC film 4 exceeds 5000 Hv, a wear amount of the clutch fork 1, namely, the counterpart sliding member thereto, augments.

It is preferable that the DLC film 4 have a thickness of from 0.1 to 10 *µ*m. When the DLC film 4 is too thin, a wear amount of the clutch-fork support 2 augments. On the other hand, when the DLC film 4 is too thick, cracks might occur in the surface of the DLC film 4, or the DLC film 4 might become likely to come off.

It is preferable that the DLC film 4 have a surface roughness Rz of 5 *µ*m or less. When the surface roughness of the DLC film 4 is too high, a wear amount of the clutch fork 1, namely, the counterpart sliding member thereto, augments.

Note that, from the viewpoint of upgrading the adhesiveness of the DLC film 4 with respect to the support sliding face 21 of the clutch-fork support 2, it is also advisable to form an intermediate layer that comprises Cr, Ti or W, and the like, on the support sliding face 21 and then form the DLC film 4 onto this intermediate layer.

A method for forming the DLC film 4 is not limited especially, and so it is possible to employ sputtering methods, CVD methods or ion plating methods, and the like.

The grease 3, which stands between the fork sliding face 11 and the DLC film 4 that is formed on the support sliding face 21, includes a base oil, a solid lubricant agent, and a thickening agent. In the present embodiment mode, this solid lubricant agent is a non-organic molybdenum-system solid lubricant agent, and moreover the thickening agent is a non-soap-system thickening agent.

As for the base oil, although the latter is not especially limited to a particular one, it is preferable that the base oil be adapted to be synthetic oils that have high heat resistance compared with that of mineral oil. It is preferable that the base oil be adapted to be at least one member that is selected from the group consisting of ester-system synthetic oils (e.g. , polyolester-system synthetic oils that, among synthetic oils, have especially high heat resistance), ether-system synthetic oils, silicone-system synthetic oils, and fluorine-system synthetic oils.

As for the non-organic molybdenum-system solid lubricant agent, although the latter is not especially limited to a particular one as far as being a solid lubricant agent other than an organic molybdenum-system solid lubricant agents, it is preferable that the non-organic molybdenum-system solid lubricant agent be adapted to be at leas t one member that is selected from the group consisting of inorganic molybdenum-system solid lubricant agents, graphite, and PTFE (or tetrafluorinated ethylene resins). Types of the inorganic molybdenum-system solid lubricant agents are not especially limited to particular ones, but it is possible to name molybdenum disulfide (MoS₂), and the like.

A type of the non-soap-system thickening agent is not especially limited to a particular one, but it is possible to use the following therefor: urea-system thickening agents, sodium tere-phthalamate, organic bentonite, silica or PTFE, and the like. Among these, it is preferable to use one of the urea-system thickening agents that are advantageous in the prospect of cost.

It is preferable that the grease 3 include a non-organic molybdenum-system solid lubricant in an amount of from 1 to 20% by mass, and a non-soap-system thickening agent in an amount of from 15 to 35% by mass, when the entirety of the grease is taken as 100% by mass. When the content of a non-organic molybdenum-system solid lubricant agent is too little, the reduction of frictional coefficient at the sliding part becomes insufficient; whereas heat resistance declines when being too much. When the content of a non-soap-system thickening agent is too little, the grease 3 becomes likely to flow out off from the sliding part; whereas sliding resistance at the sliding part becomes too great as to ensure a sufficient reduction of frictional coefficient when being too much.

It is preferable that the grease 3 exhibit a cone penetration of from 220 to 385 (e.g., a worked cone penetration or consistency according to JIS K 220.5.3). When the cone penetration of the grease 3 is too large, there might arise such a possibility that the grease 3 liquefies to get out of the sliding part at the time of sliding; whereas the sliding resistance at the sliding part becomes larger so that a frictional coefficient increases thereat when it is too small.

It is advisable that the grease 3 include another additive agent, such as an oxidation preventing agent, a rust inhibiting agent, anoilyagent, a wear-resistant agent or an extreme pressure agent, depending on needs. In a case where an additive agent, such as an oxidation preventing agent, a rust inhibiting agent, anoilyagent, a wear-resistant agent or an extreme pressure agent, is included in addition to a non-organic molybdenum-system solid lubricant agent, it is preferable that the content of a base oil be from 60 to 84% by mass in the grease 3.

In the clutch supporting structure according to the present embodiment mode, a surface roughness Rz of the fork sliding face 11, which serves as a counterpart sliding face that slides against the DLC film 4, is set at from 2 to 30 µm, and thereby predetermined grease-reservoir dents (not shown in the figure), which function as a reservoir for grease, are formed in the fork sliding face 11. Therefore, it is possible to keep the grease 3 from separating from the sliding part where the fork sliding face 11 and the DLC film 4 slide one on another, because the grease can be reserved in the resulting grease-reservoir dents.

Moreover, in the clutch supporting structure according to the present embodiment mode, a surface roughness Rz of the support sliding face 21, on which the DLC film 4 is formed, is set at equal to or less than 5 *µ*m. Consequently, in the DLC film 4, the aggressiveness thereof becomes smaller with respect to the fork sliding face 11 that serves as the counterpart sliding face to the DLC film 4. Therefore, it is possible to keep down the wear of the fork sliding face 11 as a result of such a DLC film 4. Due to such inherent advantages of the DLC film 4 as reducing frictional coefficient and upgrading wear resistance, it is possible to reduce the frictional coefficient and improve the wear resistance in the support sliding face 21 on which the DLC film 4 is formed.

Furthermore, in the clutch supporting structure according to the present embodiment mode, the grease 3 that is interposed between the fork sliding face 11 and the DLC film 4 includes a non-organic molybdenum-system solid lubricant agent that serves as a solid lubricant agent. That is, this grease does not virtually include any organic molybdenum solid lubricant agent that serves as a solid lubricant agent. Consequently, chemical reactions facilitating the wear of the DLC film 4 do not occur between the solid lubricant agent and the DLC film 4 at the time of sliding. Therefore, it is possible to materialize the reduction of frictional coefficient and the improvement of wear resistance, as a result of such a DLC film 4, for over a long period of time.

Inaddition, in the clutch supporting structure according to the present embodiment mode, the grease 3 includes a non-soap-system thickening agent that serves as a thickening agent. The decomposition temperature or boiling point of the non-soap-system thickening agent is high compared with that of a soap-system thickening agent. Consequently, the grease 3 that includes a non-soap-system thickening agent has a high heat resistance, and a high limit service temperature, compared with those of a grease that includes a soap-system thickening agent. That is, the grease 3 that includes a non-soap-system thickening agent is less likely to liquefy when being at high temperatures than a grease that includes a soap-system thickening agent. Therefore, the grease 3 that includes a non-soap-system thickening agent is less likely to detach from the sliding part when being at high temperatures.

Hence, in accordance with the clutch supporting structure according to the present embodiment mode, it is possible not only to let the DLC film 4 and the grease 3 function securely by means of a combination of the aforementioned effects, but also to maintain their functions for over a long period of time by means of these combined effects. Consequently, it is possible not only to reduce the frictional coefficient at the sliding part between the fork sliding face 11 and the DLC film 4 formed on the support sliding face 21, but also to realize the reduction of frictional coefficient and the improvement of wear resistance for over a long period of time. Furthermore, since it is possible to reduce the aggressiveness of the DLC film 4 against the fork sliding face 11 that serves as the counterpart sliding face to the DLC film 4, this also makes it feasible to upgrade the wear resistance at the fork sliding face 11.

### EMBODIMENT

### (Working Example)

Pursuant to the above-described embodiment mode, a clutch supporting structure according to Working Example was made.

A clutch fork 1 was made from a cast iron (e.g., FCD400 with 600 Hv). A fork sliding face 11 in this clutch fork 1 was finish processed to set a surface roughness Rz of the fork sliding face 11 at 12.5 *µ*m.

Moreover, a clutch-fork support 2 was made from a carbon steel (e.g. , S45C with 600 Hv). And, a support sliding face 21 in this clutch-fork support 2 was finish processed by shot peening, thereby setting a surface roughness Rz of the support sliding face 21 at 2 *µ*m. Thereafter, a DLC film 4 was formed on the support sliding face 21 by means of a CVD method. A Vickers hardness of this DLC film 4 was set at 1700 Hv, a thickness of the DLC film 4 was set at 5 *µ*m, and a surface roughness Rz of the DLC film 4 was set at 2 *µ*m.

Also, a grease 3 was interposed between the fork sliding face 11 of the clutch fork 1 and the DLC film 4 that was formed on the support sliding face 21 of the clutch-fork support 2, thereby adapting these to form a clutch supporting structure according to Working Example.

The used grease 3 included an ester-system (e.g., a polyolester-system) base oil, which served as a synthetic oil, a urea-system thickening agent, which served as a non-soap-system thickening agent, and an inorganic molybdenum-system solid lubricant agent (e.g., MoS₂), which served as a non-organic molybdenum-system solid lubricant agent. Blended proportions of the respective components in this grease 3 were as follows: 70% by mass for the ester-system base oil; 25% by mass for the non-soap-system thickening agent; and 5% by mass for the inorganic molybdenum-system solid lubricant agent; when the entire grease was taken as 100% by mass. Note that this grease 3 exhibited a cone penetration of 360 (e.g., a worked cone penetration or consistency according to JIS K 220.5.3).

### (Comparative Example No. 1)

Except that the DLC film 4 was not formed on the support sliding face 21 of the fork-clutch support 2, a clutch supporting structure according to Comparative Example No. 1 was made in the same manner as the Working Example.

### (Comparative Example No. 2)

Except that a grease including an organic molybdenum-system solid lubricant agent was used instead of the grease 3 including the inorganic molybdenum-system solid lubricant agent, a clutch supporting structure according to Comparative Example No. 2 was made in the same manner as the Working Example. Note that molybdenum dithiocarbamate was used as the organic molybdenum-system solid lubricant agent.

### (Evaluation of Sliding Resistance)

Regarding the clutch support structures according to the Working Example and Comparative Example No. 1, the sliding resistances were evaluated. This was done by means of measuring the sliding resistances with respect to the number of sliding operations in a unit in which a clutch and a system for conveying tread force to clutch pedal were connected to each other.

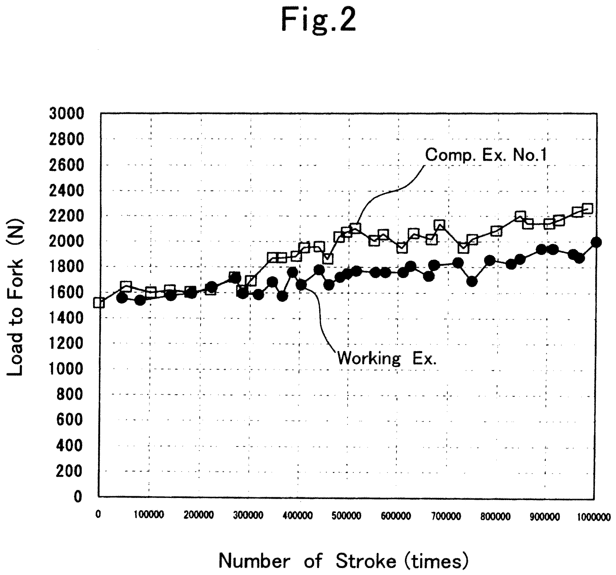

Those results are shown in Fig. 2. Note that, in Fig. 2, the symbol "●" represents the measurement results of the clutch supporting structure according to the Working Example, and the symbol "□" represents the measurement results of the clutch supporting structure according to Comparative Example No. 1. Moreover, in Fig. 2, the horizontal axis represents the number of strokes, and the vertical axis represents the load to fork (i.e. , the sliding resistance between the clutch fork 1 and the clutch-fork support 2.).

As can be apparent from Fig. 2, the sliding resistances were lowered by forming the DLC film 4 on the support sliding face 21, and it was possible to maintain that for a long period of time.

### (Evaluation on Relationship between Surface Roughness of Support Sliding Face 21 and Mating-member Wear Amount)

The following test specimens were made ready, which test specimens had the same constructions as those of the clutch supporting according to the Working Example except that the surface roughness of the support sliding face 21 was changed variously:
a cylindrical test specimen (corresponding to the clutch fork 1); and
a flat-plate test specimen (corresponding to the clutch-fork support 2) in which the DLC film 4 was formed on the sliding face.

And, a reciprocal sliding testing machine was used to examine the relationship between the surface roughness of the sliding face (corresponding to the support sliding face 21) in the flat-plate test specimen and the mating-member wear amount.

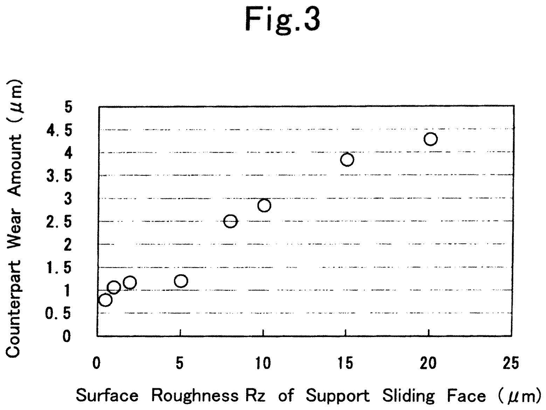

As can be seen from the results shown in Fig. 3, the mating-member wear amount declined extremely when the surface roughness Rz of the support sliding face 21 on which the DLC film 4 was formed became 5 *µ*m or less.

(Evaluation on Relationship between Surface Roughness of Support Sliding Face 21 and Wear Amount of DLC Film 4)

The following test specimens were made ready, which test specimens had the same constructions as those of the clutch supporting according to the Working Example except that the surface roughness of the support sliding face 21 was changed variously:
a cylindrical test specimen (corresponding to the clutch fork 1); and
a flat-plate test specimen (corresponding to the clutch-fork support 2) in which the DLC film 4 was formed on the sliding face.

And, a reciprocal sliding testing machine was used to examine the relationship between the surface roughness of the sliding face (corresponding to the support sliding face 21) in the flat-plate test specimen and the wear amount of the DLC film that is formed on this sliding face.

Concerning the clutch supporting structure according to Comparative Example No. 2 that used the grease including an organic molybdenum-system solid lubricant, too, the same evaluation was also carried out.

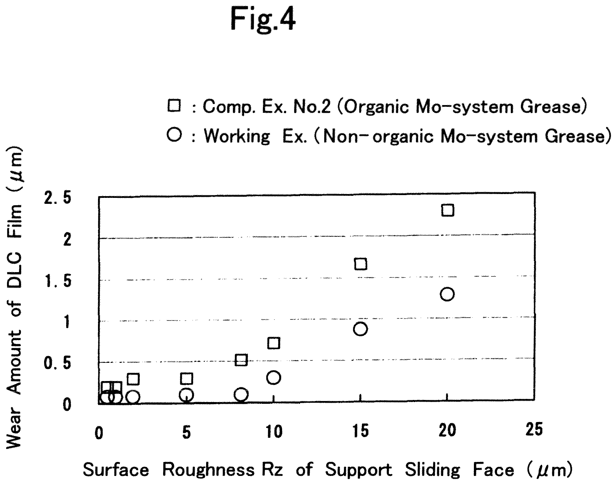

Those results are shown in Fig. 4. Note that, in Fig. 4, the symbol "○" represents the measurement results of the clutch supporting structure according to the Working Example, and the symbol "□" represents the measurement results of the clutch supporting structure according to Comparative Example No. 2. As can be seen from Fig. 4, the wear resistance of the DLC film 4 declined extremely when using the grease that included a non-organic molybdenum-system solid lubricant agent.

(Evaluation on Relationship between Surface Roughness of Fork Sliding Face 11 and Long-term Maintenance of Low Friction)

The following test specimens were made ready, which test specimens had the same constructions as those of the clutch supporting according to the Working Example except that the surface roughness of the fork sliding face 11 was changed variously:
a cylindrical test specimen (corresponding to the clutch fork 1); and
a flat-plate test specimen (corresponding to the clutch-fork support 2) in which the DLC film 4 was formed on the sliding face.

And, a reciprocal sliding testing machine was used to examine the surface roughness of the sliding face (corresponding to the fork sliding face 11) of the cylindrical test specimen in order for realizing low friction for a long period of time. The results are shown in Table 1.

**(TABLE 1)**

| Surface Roughness of Fork Sliding Face (µm Rz) | Frictional Coefficient after 30 Minutes | Frictional Coefficient after 60 Minutes |
|---|---|---|
| 1 | 0.09 | 0.15 |
| 2 | 0.10 | 0.09 |
| 5 | 0.11 | 0.09 |
| 10 | 0.10 | 0.10 |
| 20 | 0.12 | 0.11 |
| 30 | 0.11 | 0.11 |
| 40 | 0.15 | 0.16 |
| 50 | 0.15 | 0.15 |

As can be understood from Table 1, the frictional coefficient at the time of 60 minutes later increased extremely when the surface roughness Rz of the fork sliding face 11 became less than 2 *µ*m. This is because the grease 3 becomes likely to flow out off from the fork sliding face 11 when the surface roughness Rz of the fork sliding face 11 becomes less than 2 *µ* m. Moreover, the frictional coefficient increased even at the time of the beginning of the test when the surface roughness Rz of the fork sliding face 11 exceeded 30 *µ*m. This is because the fork sliding face 11 and the DLC film 4 become likely to contact with each other directly when the surface roughness Rz of the fork sliding face 11 exceeds 30 *µ*m.

## Claims

1. A clutch supporting structure being **characterized in that**:
the clutch supporting structure is equipped with:
a clutch fork (1) and a clutch-fork support (2), which respectively have a fork sliding face (11) and a support sliding face (21) that slide one on another; and
a grease (3) that is interposed between both of the sliding faces (11, 21); and
a surface roughness Rz of said fork sliding face (11) with which the grease (3) makes contact is from 2 to 30 *µ*m, and the fork sliding face (11) has grease-reservoir dents;
a surface roughness Rz of said support sliding face (21) is equal to or less than 5 *µ*m, and a diamond-like carbon film (4) is formed on the support sliding face (21); and
said grease (3) includes a solid lubricant agent and a thickening agent;
the solid lubricant agent is at least one member that is selected from the group consisting of inorganic molybdenum-system solid lubricant agents, graphite and PTFE ; and
the thickening agent is a non-soap-system thickening agent.

2. The clutch supporting structure as set forth in claim 1, wherein said non-soap-system thickening agent is a urea-system thickening agent.

3. The clutch supporting structure as set forth in claim 1 or 2, wherein said grease (3) includes said solid lubricant agent in an amount of from 1 to 20% by mass, and said non-soap-system thickening agent in an amount of from 15 to 35% by mass, when the entirety of the grease (3) is taken as 100% by mass.

4. The clutch supporting structure as set forth in either one of claims 1 through 3, wherein a Vickers hardness of said diamond-like carbon film (4) is from 1000 to 5000 Hv.

5. The clutch supporting structure as set forth in either one of claims 1 through 4, wherein a thickness of said diamond-like carbon film (4) is from 1 to 10 *µ*m.

6. The clutch supporting structure as set forth in either one of claims 1 through 5, wherein a Vickers hardness of said fork sliding face (11) is from 400 to 850 Hv.

## Patentansprüche

1. Kupplungsstützkonstruktion, **dadurch gekennzeichnet, dass**:
die Kupplungsstützkonstruktion versehen ist mit:
einer Kupplungsgabel (1) und einer Kupplungsgabelhalterung (2), die eine Gabelgleitfläche (11) bzw. eine Halterungsgleitfläche (21), die aufeinander gleiten, aufweisen, und
einem Schmiermittel (3), das zwischen beiden Gleitflächen (11, 21) angeordnet ist, und
wobei eine Oberflächenrauheit Rz der Gabelgleitfläche (11), mit der das Schmiermittel (3) in Berührung kommt, von 2 bis 30 µm beträgt und die Gabelgleitfläche (11) Schmiermittelspeichervertiefungen aufweist,
eine Oberflächenrauheit Rz der Halterungsgleitfläche (21) kleiner gleich 5 µm ist und auf der Halterungsgleitfläche (21) ein diamantartiger Kohlenstofffilm (4) ausgebildet ist, und
das Schmiermittel (3) einen Festschmierstoff und ein Verdickungsmittel umfasst,
der Festschmierstoff mindestens ein aus der Gruppe umfassend anorganische Molybdänsystem-Festschmierstoffe, Graphit und PTFE ausgewählter Vertreter ist, und
das Verdickungsmittel ein Nichtseifensystem-Verdickungsmittel ist.

2. Kupplungsstützkonstruktion nach Anspruch 1, wobei das Nichtseifensystem-Verdickungsmittel ein Harnstoffsystem-Verdickungsmittel ist.

3. Kupplungsstützkonstruktion nach Anspruch 1 oder 2, wobei das Schmiermittel (3) den Festschmierstoff in einer Menge von 1 bis 20 Masseprozent und das Nichtseifensystem-Verdickungsmittel in einer Menge von 15 bis 35 Masseprozent umfasst, wenn die Gesamtheit des Schmiermittels (3) als 100 Masseprozent angenommen wird.

4. Kupplungsstützkonstruktion nach einem beliebigen der Ansprüche 1 bis 3, wobei eine Vickershärte des diamantartigen Kohlenstofffilms (4) von 1000 bis 5000 Hv beträgt.

5. Kupplungsstützkonstruktion nach einem beliebigen der Ansprüche 1 bis 4, wobei eine Dicke des diamantartigen Kohlenstofffilms (4) von 1 bis 10 µm beträgt.

6. Kupplungsstützkonstruktion nach einem beliebigen der Ansprüche 1 bis 5, wobei eine Vickershärte der Gabelgleitfläche (11) von 400 bis 850 Hv beträgt.

## Revendications

1. Structure de support d'embrayage **caractérisée en ce que** :
la structure de support d'embrayage est équipée de :
une fourche d'embrayage (1) et un support de fourche d'embrayage (2), ayant respectivement une face de coulissement de fourche (11) et une face de coulissement de support (21) qui coulissent l'une sur l'autre ; et
une graisse (3) qui est intercalée entre les deux faces coulissantes (11, 21) ; et
la rugosité de surface Rz de ladite face coulissante de fourche (11) avec laquelle la graisse (3) entre en contact est comprise entre 2 et 30 µm, et la face coulissante de fourche (11) a des dentures formant réservoir de graisse ;
la rugosité de surface Rz de ladite face coulissante de support (21) est égale ou inférieure à 5 µm, et un film de carbone semblable à du diamant (4) est formé sur la face coulissante de support (21) ; et
ladite graisse (3) comprend un agent lubrifiant solide et un agent épaississant ;
l'agent lubrifiant solide est au moins un élément choisi dans le groupe constitué d'agents lubrifiants solides de système à molybdène inorganique, de graphite et de PTFE ; et
l'agent épaississant est un agent épaississant à système sans savon.

2. Structure de support d'embrayage selon la revendication 1, dans laquelle ledit agent épaississant de système sans savon est un agent épaississant à système d'urée.

3. Structure de support d'embrayage selon la revendication 1 ou 2, dans laquelle ladite graisse (3) comprend ledit agent lubrifiant solide dans une quantité de 1 à 20% en masse, et ledit agent épaississant à système sans savon dans une quantité de 15 à 35% en masse, quand la totalité de la graisse (3) représente 100% en masse.

4. Structure de support d'embrayage selon l'une quelconque des revendications 1 à 3, dans laquelle la dureté Vickers dudit film de carbone semblable à du diamant (4) est de 1000 à 5000 Hv.

5. Structure de support d'embrayage selon l'une quelconque des revendications 1 à 4, dans laquelle l'épaisseur dudit film de carbone semblable à du diamant (4) est comprise entre 1 et 10 µm.

6. Structure de support d'embrayage selon l'une quelconque des revendications 1 à 5, dans laquelle la dureté Vickers de ladite face coulissante de fourche (11) est comprise entre 400 et 850 Hv.
